# EUROPEAN PATENT APPLICATION

(11) **EP 4 437 915 A1**
(43) Date of publication of application: **02.10.2024**
(21) Application number: 23165187.8
(22) Date of filing: 29.03.2023
(51) Int. Cl.: A47J 31/46, A47J 31/52

(54) **BEVERAGE MACHINE AND METHOD**

(71) Applicant: Versuni Holding B.V., 5656 AE Eindhoven (NL)
(72) Inventor: FAVERO, Andrea, 5656 AE Eindhoven (NL); SURIA, Jayachandran, 5656 AE Eindhoven (NL)
(74) Representative: de Vries, Janna

(57) **Abstract**

Provided is a beverage machine (10) comprising a vibration pump (12) for displacing liquid to prepare a beverage. The vibration pump comprises a pumping member and a solenoid energizable to cause displacement of the pumping member. A control system (28) receives an electrical signal from a power supply. The electrical signal may define a maximum power for driving the solenoid. The control system initially drives the solenoid, using the electrical signal, at a first power level. Power is then decreased from the first power level. The first power level is, for example, at least 80% of the maximum power. In such an example, an initial time period of at most 1 second, preferably less than 500 milliseconds, most preferably less than 200 milliseconds is defined from start of energizing of the solenoid towards the first power level to a point at which power is decreased from the first power level. In more general terms, a power spike for driving the solenoid is generated by the control unit using the electrical signal, which power spike initially drives the solenoid at the first power level and then diminishes, e.g. decays, to define the decrease in power from the first power level. Subsequently to the decrease in power from the first power level, the control system uses the electrical signal to increase power to drive the solenoid. Further provided are a method for operating such a beverage machine and a related computer program.

## Description

### FIELD OF THE INVENTION

The invention relates to a vibration pump-comprising beverage machine, and a method and related computer program for operating the vibration pump.

### BACKGROUND OF THE INVENTION

On the market there are several kinds of beverage machines for beverage preparation. In such beverage machines, a certain food type or raw material, for example coffee, tea, milk, chocolate, etc., is processed by adding water, in many cases hot water.

Such beverage machines tend to be equipped with a water supply system that includes a container or tank for liquid, e.g. water, a pump for displacing the liquid, and a beverage/food processing unit. The water supply system may also include a heater for heating the liquid.

Vibration pumps tend to be employed in beverage machines because of their favorable performance to cost ratio. A pumping member, e.g. plunger or piston, of such vibration pumps may reciprocate at the mains frequency, e.g. 50 Hz or 60 Hz, with check valves permitting fluid displacement in only one direction.

Pump technology has been improving over time. A water level sensor is conventionally used to avoid a scenario that air enters the pump when the container/tank has been emptied. However, self-priming pumps may obviate inclusion of such a water level sensor in the container/tank. This is due to the self-priming capability of such pumps enabling them to efficiently return to normal operation following air entering the pump as a consequence of emptying of the container/tank. Omission of a water level sensor can assist to make the water supply system cheaper to implement.

Challenges nonetheless remain in relation to vibration pumps. In particular, vibration pumps can generate persistent and excessive noise during use. This issue of excessive noise being generated by vibration pumps, particularly during a priming process in which air is pumped out of the vibration pump until liquid is drawn into the vibration pump, is yet to be satisfactorily addressed.

### SUMMARY OF THE INVENTION

The invention is defined by the claims.

According to examples in accordance with an aspect of the invention, there is provided a beverage machine comprising: a vibration pump for displacing liquid to prepare a beverage, the vibration pump comprising a pumping member and a solenoid energizable to cause displacement of the pumping member; and a control system configured to: receive an electrical signal from a power supply; initially drive the solenoid, using the electrical signal, at a first power level; decrease power from the first power level; and subsequently to the decrease in power from the first power level, increase power to drive the solenoid using the electrical signal, wherein the control system is configured to use the electrical signal to generate a power spike that initially drives the solenoid at the first power level and then diminishes to define the decrease in power from the first power level.

The power spike can be regarded as being generated at start-up of the vibration pump, for example when a user causes the vibration pump to be switched on by controlling a user interface, e.g. switch, included in the beverage machine.

When a beverage machine's vibration pump displaces fluid at a relatively high fluid flowrate, particularly at start-up of the vibration pump, the pumping member, e.g. plunger, and the fluid have elevated accelerations and decelerations resulting in greater vibration thus higher noise. Conversely, when the fluid flowrate decreases, the pumping member, e.g. plunger, and fluid have lower accelerations and decelerations resulting in less vibration thus lower noise. The latter is typically the case when a beverage processing chamber to which the liquid is displaced by the vibration pump is filled with liquid, e.g. water. This explains why the beverage machine's vibration pump is typically noisier when starting the vibration pump, and less noisy when the beverage is being delivered.

When the vibration pump is running without water, for example when the beverage machine is being used for the very first time or following emptying of a container that holds liquid to be displaced by the vibration pump, the pumping member, e.g. plunger, may have even higher accelerations and decelerations resulting in significantly greater vibration and noise.

One potential option for alleviating high noise generation by the vibration pump when starting the vibration pump may be to initially drive the solenoid at a power level that is significantly lower than, for example around half of, the maximum power for driving the solenoid defined by the electrical signal from a power supply of the beverage machine. The electrical signal may, for example, be an AC voltage signal provided by a mains power source.

A disadvantage with this approach is that initially driving the solenoid at such a low power level may render it more difficult for the pumping member, e.g. plunger, to overcome static friction. Initially driving the solenoid at such a low power level may also make breaking adhesion(s) between the pumping member, e.g. plunger, and guiding surface(s) along which the pumping member is movable more difficult. It is noted that such adhesion(s) are liable to arise if the vibration pump has not been operated for a relatively long time.

The beverage machine according to the present disclosure correspondingly comprises a control system configured to receive the electrical signal, e.g. voltage or current signal, and use the electrical signal to generate a power spike that initially drives the solenoid at a first power level and then diminishes to define a decrease in power from the first power level. This assists the pumping member to overcome static friction, as well as any adhesion(s) between the pumping member and the guiding surface(s) of the vibration pump along which the pumping member is movable.

Moreover, the sound generated by the vibration pump when controlled to assist the pumping member to overcome static friction via the power spike may be perceived as a "tick", rather than a persistent annoyingly loud noise.

The electrical signal is from a power supply, for example derives from an external, e.g. mains, power source. It is noted that the electrical signal may define the maximum power for driving the solenoid.

In some embodiments, the control system initially drives the solenoid, using the electrical signal, at a first power level that is at least 80%, preferably at least 90%, most preferably at least 95% of the maximum power. Such a first power level has been found to be effective in assisting the pumping member to overcome static friction, as well as any adhesion(s) between the pumping member and the guiding surface(s) of the vibration pump along which the pumping member is movable.

In some embodiments, the first power level is 100% of the maximum power. This may provide most assistance to the pumping member to overcome static friction, as well as any adhesion(s) between the pumping member and the guiding surface(s) of the vibration pump along which the pumping member is movable.

In some embodiments, an initial time period of at most 1 second, preferably at most 500 milliseconds, most preferably at most 200 milliseconds is defined from start of energizing of the solenoid towards the first power level to a point at which power is decreased from the first power level. By limiting the initial time period in this way, user discomfort/annoyance associated with an elevated noise level associated with assisting the pumping member to overcome static friction may be lessened.

It is noted that the initial time period being less than 200 milliseconds may mean that the solenoid is driven at the first power level, e.g. full power, for a single wave of the electrical signal or for only a few waves, e.g. fewer than fifteen waves, of the electrical signal, noting that a mains electrical signal may have a frequency of 50 Hz or 60 Hz.

Subsequently to the decrease in power from the first power level, the control system can increase power to drive the solenoid using the electrical signal. This increase in power from a level lower than the maximum power may, following the above-described overcoming of static friction, balance noise generation with efficient liquid displacement to produce the beverage and/or efficient fluid displacement to prime the vibration pump.

In some embodiments, the control system is configured to generate, using the electrical signal, a pulse of power for initially driving the solenoid to the first power level. In such embodiments, the power spike may be defined by the pulse of power. The pulse may be defined by an upward slope to reach the first power level and a downward slope away from the first power level being parallel to each other, or at least substantially parallel to each other.

Such a pulse shape, e.g. rectangular pulse shape, in which the increase to the first power level and the decrease in power from the first power level are abrupt/sudden can assist the pumping member to overcome static friction whilst minimizing generation of persistent loud noise.

In at least some embodiments, the control system is configured to decrease power from the first power level to a second power level that is greater than zero. By avoiding ceasing of powering of the solenoid in this way, the pump control can beneficially capitalize on the above-described assistance to the pumping member to overcome static friction.

In some embodiments, the second power level is less than 85%, preferably less than 75%, of the maximum power for driving the solenoid. Such a second power level has been empirically found to assist in alleviating excessive noise generation by limiting pumping member, e.g. plunger/piston, acceleration.

In some embodiments, the second power level is between 40% and 85%, most preferably between 40% and 75%, such as about 60%, of the maximum power for driving the solenoid.

Thus, efficient fluid pumping may be balanced with alleviating excessive noise generation.

In some embodiments, the control system is configured to linearly increase power for driving the solenoid subsequently to the decrease in power from the first power level.

In alternative embodiments, the control system is configured to non-linearly increase power for driving the solenoid subsequently to the decrease in power from the first power level. Such non-linear increase in power may assist in reducing noise generated by the vibration pump.

In some embodiments, the control system is configured to increase power, subsequently to the decrease in power from the first power level, according to a ramped profile, e.g. a linear or non-linear ramped profile, but with one or more pulses being provided along, and protruding from, the ramped profile. Including such pulse(s) along and protruding from the ramped profile may assist the pumping member to overcome static friction and/or assist with providing audible feedback to the user of the beverage machine.

In such embodiments, the, e.g. each of the, one or more pulses may protrude to a pulse power level that is at least 80%, preferably at least 90%, most preferably at least 95%, for example 100%, of the maximum power.

In at least some embodiments, the control system is configured to adjust power level for driving the solenoid by applying phase angle control to the electrical signal. The electronic circuitry that enables phase cutting control may be already integrated into an existing beverage machine. Accordingly, the combined pump noise reduction and static friction overcoming advantages explained herein may be realizable without hardware changes and cost increases associated with such hardware increases.

In some embodiments, the control system is configured to implement the initial driving of the solenoid, the decreasing power from the first power level, and the subsequent increasing power to drive the solenoid during a pump priming process in which both air and liquid are displaced by the vibration pump.

The control system implementing this control sequence during the pump priming process enables combined pump noise reduction and static friction overcoming when the vibration pump is started without liquid being within the pump chamber in which the pumping member is displaceable.

Such a control sequence, or at least a variation thereof that retains the combined pump noise reduction and static friction overcoming advantages, may alternatively or additionally be employable at every start-up of the vibration pump, in other words during a beverage preparation process.

Accordingly, the control system may be configured to implement the initial driving of the solenoid, the decreasing power from the first power level, and the subsequent increasing power to drive the solenoid during such a beverage preparation process in which liquid, e.g. only liquid, is displaced by the vibration pump.

In such embodiments, the second power level employed in the pump priming process may be lower than the second power level employed in the beverage preparation process.

Such a lower second power level in the case of the pump priming process may reflect greater need to initially limit acceleration of the pumping member, e.g. plunger/piston, when the vibration pump is displacing air.

In some embodiments, the control system is configured to increase power to an operational power level subsequently to the decrease in power from the first pump level. This may assist throughput of fluid, in particular liquid and/or air, through the vibration pump.

In such embodiments, the operational power level may be at least 80%, preferably at least 90%, most preferably at least 95% of the maximum power.

In some embodiments, the operational power level is 100% of the maximum power. Alternatively, the control system may increase power to an operational power level that is less than the maximum power (100%), for example in a scenario in which the vibration pump is to be stopped afterward without proceeding to implement the beverage processing process, or in a scenario in which the beverage to be delivered by the beverage machine requires an operational power level lower than 100%.

In further embodiments, the control system increases power to an operational power level equal to the maximum power (100%) should energizing of the vibration pump be required to be maintained in order to combine the priming process with the beverage preparation process.

In some embodiments, the control system is configured to, following the decrease in power from the first power level and prior to the increase in power, maintain a constant power level using the electrical signal. For example, the above-mentioned second power level may be maintained for a given time period before being increased, e.g. abruptly increased, to the operational power level, for example to 100% of the maximum power.

In at least some embodiments, the beverage machine comprises a container for containing the liquid, and a beverage processing chamber.

In such embodiments, the vibration pump may be arranged to displace the liquid from the container to the beverage processing chamber.

In some embodiments, the beverage machine further comprises a heater for heating the liquid, for instance for heating the liquid as it passes from the container to the beverage processing chamber.

According to another aspect there is provided a method for operating a solenoid-comprising vibration pump of a beverage machine, the method comprising: receiving an electrical signal from a power supply; initially driving the solenoid, using the electrical signal, at a first power level; decreasing power from the first power level; and increasing power to drive the solenoid using the electrical signal subsequently to the decreasing power, wherein the method comprises using the electrical signal to generate a power spike that initially drives the solenoid at the first power level and then diminishes to define the decrease in power from the first power level.

As previously mentioned in relation to the beverage machine, the electrical signal may define a maximum power for driving the solenoid; with the first power level being at least 80%, preferably at least 90%, most preferably at least 95% of the maximum power. In some embodiments, the first power level is 100% of the maximum power.

Alternatively or additionally, an initial time period of at most 1 second, preferably at most 500 milliseconds, most preferably at most 200 milliseconds may be defined from start of energizing of the solenoid towards the first power level to a point at which power is decreased from the first power level.

Alternatively or additionally, the method may comprise generating, using the electrical signal, a pulse of power for initially driving the solenoid to the first power level.

Alternatively or additionally, the control system may be configured to decrease power from the first power level to a second power level that is greater than zero. The second power level may, for example, be less than 85%, preferably less than 75%, of the maximum power for driving the solenoid.

Alternatively or additionally, the increasing power comprises linearly or non-linearly increasing power for driving the solenoid subsequently to the decreasing power from the first power level, or the increasing power, subsequently to the decrease in power from the first power level, is according to a ramped profile but with one or more pulses being provided along, and protruding from, the ramped profile. In such embodiments, the, e.g. each of the, one or more pulses may, for example, protrude to a pulse power level that is at least 80%, preferably at least 90%, most preferably at least 95%, for example 100%, of the maximum power.

Alternatively or additionally, the increasing power may comprise increasing power to an operational power level subsequently to the decrease in power from the first power level. Such an operational power level can be at least 80%, preferably at least 90%, most preferably at least 95%, for example 100%, of the maximum power.

Alternatively or additionally, the method comprises, following the decreasing power from the first power level and prior to the increasing the power, maintaining a constant power level using the electrical signal.

Alternatively or additionally, adjusting power level for driving the solenoid in the method comprises applying phase angle control to the electrical signal.

Alternatively or additionally, the decreasing power from the first power level, and the subsequent increasing power to drive the solenoid may be during a pump priming process in which both air and liquid are displaced by the vibration pump and/or during a beverage preparation process in which liquid, e.g. only liquid, is displaced by the vibration pump.

According to a further aspect there is provided a computer program comprising computer program code which is configured, when the computer program is run on one or more processors, to cause the one or more processors to implement the method according to any of the embodiments described herein.

One or more non-transitory computer readable media may be provided, which non-transitory computer readable media have a computer program stored thereon, with the computer program comprising computer program code which is configured, when the computer program is run on the one or more processors, to cause the one or more processors to implement the method according to any of the embodiments described herein.

The processor(s) may be included in the control system of the beverage machine.

More generally, embodiments described herein in relation to the beverage machine may be applicable to the method and computer program, embodiments described herein in relation to the method may be applicable to the beverage machine and the computer program, and embodiments described herein in relation to the computer program may be applicable to the beverage machine and the method.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
FIG. 1 provides a block diagram of a beverage machine according to an example;
FIG. 2 provides a pump flow curve of a vibration pump according to an example;
FIGs. 3A to 3G graphically show various examples of pump control used for preparing a beverage and pump control used when priming a vibration pump;
FIG. 4 graphically shows an electrical signal derived from a mains power source, and phase cutting of the electrical signal; and
FIG. 5 provides a flowchart of a method according to an example.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

Provided is a beverage machine comprising a vibration pump for displacing liquid to prepare a beverage. The vibration pump comprises a pumping member and a solenoid energizable to cause displacement of the pumping member. A control system receives an electrical signal from a power supply. The electrical signal may define a maximum power for driving the solenoid. The control system initially drives the solenoid, using the electrical signal, at a first power level. Power is then decreased from the first power level. The first power level is, for example, at least 80% of the maximum power. In such an example, an initial time period of at most 1 second, preferably less than 500 milliseconds, most preferably less than 200 milliseconds is defined from start of energizing of the solenoid towards the first power level to a point at which power is decreased from the first power level. In more general terms, a power spike for driving the solenoid is generated by the control unit using the electrical signal, which power spike initially drives the solenoid at the first power level and then diminishes, e.g. decays, to define the decrease in power from the first power level. Subsequently to the decrease in power from the first power level, the control system uses the electrical signal to increase power to drive the solenoid. Further provided are a method for operating such a beverage machine and a related computer program.

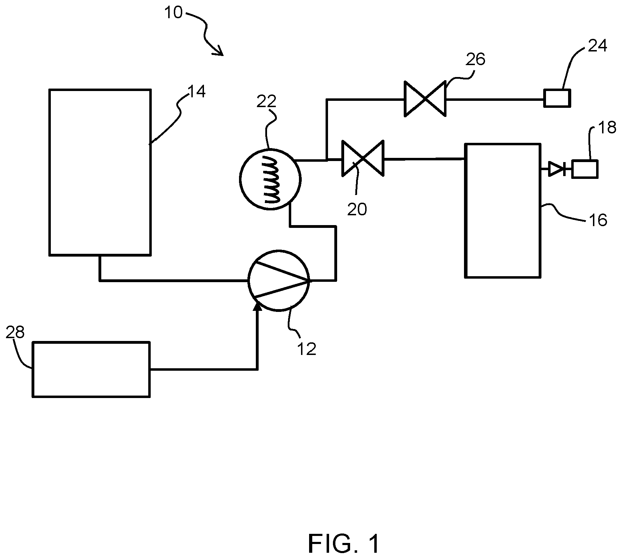

FIG. 1 provides a block diagram of a beverage machine 10 according to an example. The beverage machine 10 includes a vibration pump 12 for displacing liquid to prepare a beverage. The vibration pump 12 comprises a pumping member and a solenoid (not visible). The solenoid is energizable to cause displacement of the pumping member. To this end, the pumping member may include a magnetic material, e.g. a ferromagnetic material.

The displacement of the pumping member, in turn, causes displacement of the liquid. In at least some embodiments, the vibration pump 12 includes check valves that allow fluid displacement in only one direction.

The pumping member may have any suitable design provided that the pumping member is capable of displacing the liquid when the pumping member is caused to move by the solenoid. The pumping member may comprise, e.g. be defined by, a plunger or diaphragm.

The vibration pump 12 may include a spring arranged to be compressed when the pumping member is caused to move by the solenoid. The present disclosure primarily concerns controlling the vibration pump 12, as will be described in more detail herein below.

In at least some embodiments, such as shown in FIG. 1, the beverage machine 10 comprises a container 14 for containing liquid, and a beverage processing chamber 16. In such embodiments, the vibration pump 12 may be arranged to displace the liquid from the container 14 to the beverage processing chamber 16.

A beverage delivery outlet 18 may be provided downstream of the beverage processing chamber 16 for allowing the beverage to exit the beverage machine 10.

The liquid may be displaced to the beverage processing chamber 16 via a first valve 20, e.g. a first electronic valve.

In some embodiments, such as shown in FIG. 1, the beverage machine 10 comprises a heater 22 for heating the liquid. In such embodiments, the vibration pump 12 may be arranged to pump the liquid to the heater 22, for instance to heat the liquid as it passes towards the beverage processing chamber 16.

It is noted that a heated liquid supply system of the beverage machine 10 can be regarded as including the vibration pump 12, the container 14, the beverage processing chamber 16, and optionally the heater 22.

In certain embodiments, such as shown in FIG. 1, the beverage machine 10 includes a steam outlet 24, e.g. comprising a steam nozzle, through which steam is deliverable. In such embodiments, the steam may pass to the steam outlet 24 via a steam valve 26. The steam may be delivered via the steam outlet 24, for instance for the purpose of heating and/or frothing milk.

The beverage machine 10 may make use of a single heater 22 to selectively supply hot liquid, e.g. hot water, of about 100°C to the beverage processing chamber 16, and steam of about 140°C (or more). Alternatively, the beverage machine 10 may include a dedicated heater for generating steam in addition to the heater 22.

The beverage machine 10 may be used to prepare various different types of beverage, such as coffee, tea, milk, drinking chocolate, e.g. hot chocolate, etc.

Various different types of raw material may thus be added to the beverage processing chamber 16 for combining with the liquid, e.g. water, pumped thereto by the vibration pump 12.

The raw material may be added to the beverage processing chamber 16 in various ways. In some embodiments, the raw material, e.g. ground coffee, may be supplied in a pre-portioned form, such as in a capsule, pod, pad or the like.

Particular mention is made of the beverage machine 10 comprising a coffee machine, e.g. a coffee machine to which ground coffee is supplied in a pre-portioned form, such as in a capsule, pod, pad or the like.

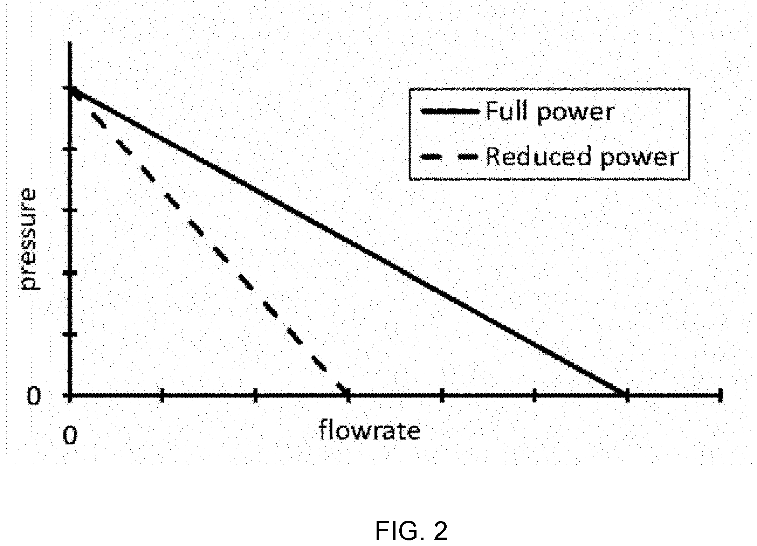

More generally, the vibration pump 12 may displace fluid at a relatively high flowrate when a downstream circuit has a relatively low counterpressure. Conversely, the flowrate at which fluid is displaced by the vibration pump 12 may become progressively lower as the counterpressure in the downstream circuit increases. These observations are graphically represented in FIG. 2, which shows flowrate vs pressure when a vibration pump 12 is operated at full power (solid line), and at reduced power (dashed line).

When the vibration pump 12 displaces fluid at a relatively high fluid flowrate, which in conventional beverage machines 10 is typically the case each time the vibration pump 12 is started, the pumping member, e.g. plunger, and the fluid have elevated accelerations and decelerations resulting in greater vibration thus higher noise. Conversely, when the fluid flowrate decreases, the pumping member, e.g. plunger, and fluid have lower accelerations and decelerations resulting in less vibration thus lower noise. The latter is typically the case when the beverage processing chamber 16 is filled with liquid, e.g. water. This explains why the beverage machine's 10 vibration pump 12 is typically noisier when starting the vibration pump 12, and less noisy when the beverage is being delivered.

When the vibration pump 12 is running without water, for example when the beverage machine 10 is being used by the consumer for the very first time or following emptying of the container 14, the pumping member, e.g. plunger, may have even higher accelerations and decelerations resulting in significantly greater vibration and noise.

One potential option for alleviating high noise generation by the vibration pump 12 when starting the vibration pump 12 may be to initially drive the solenoid at a power level that is significantly lower than, for example around half of, the maximum power for driving the solenoid defined by the electrical signal from a power supply of the beverage machine 10. The electrical signal may, for example, be an AC voltage signal derived from a mains power source.

A disadvantage with this approach is that initially driving the solenoid at such a low power level may render it more difficult for the pumping member, e.g. plunger, to overcome static friction. Initially driving the solenoid at such a low power level may also make breaking adhesion(s) between the pumping member, e.g. plunger, and guiding surface(s) along which the pumping member is movable more difficult. It is noted that such adhesion(s) are liable to arise if the vibration pump 12 has not been operated for a relatively long time.

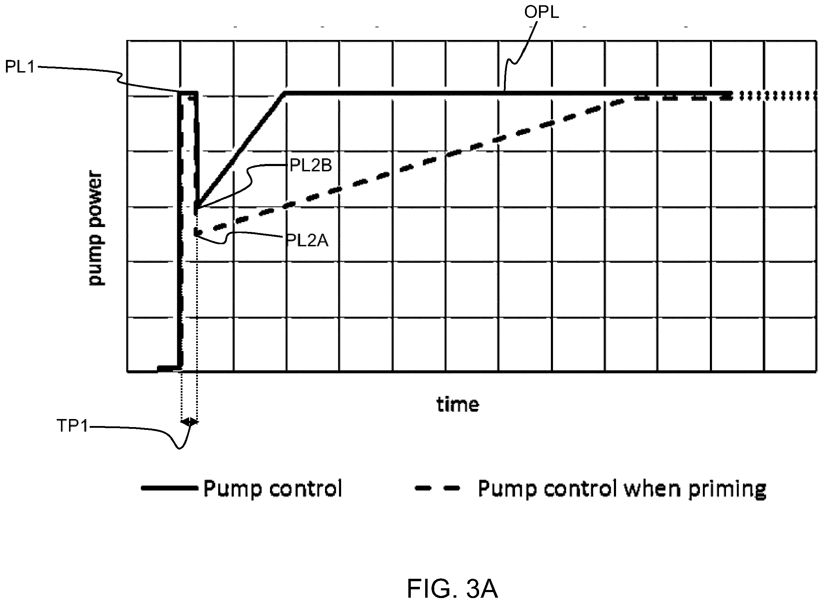

Referring to FIGs. 1 and 3A, the beverage machine 10 accordingly comprises a control system 28 configured to receive the electrical signal. The electrical signal is from a power supply, for example derives from an external, e.g. mains, power source. The control system 28 initially drives the solenoid, using the electrical signal, at a first power level PL1, and then decreases power from the first power level PL1.

Evident in the non-limiting example graphically depicted in FIG. 3A is that the control system is configured to use the electrical signal to generate a power spike that initially drives the solenoid at the first power level PL1 and then diminishes to define the decrease in power from the first power level PL1.

The power spike can be regarded as being generated at start-up of the vibration pump 12, for example when a user causes the vibration pump 12 to be switched on by controlling a user interface, e.g. switch, included in the beverage machine 10.

The power spike may assist the pumping member to overcome static friction, as well as any adhesion(s) between the pumping member and the guiding surface(s) of the vibration pump 12 along which the pumping member is movable. Moreover, the sound generated by the vibration pump 12 when controlled to assist the pumping member to overcome static friction via the power spike may be perceived as a "tick", rather than a persistent annoyingly loud noise.

In some embodiments, the first power level PL1 is at least 80%, preferably at least 90%, most preferably at least 95% of the maximum power.

The first power level PL1 being at least 80% of the maximum power may assist the pumping member to overcome static friction, as well as any adhesion(s) between the pumping member and the guiding surface(s) of the vibration pump 12 along which the pumping member is movable.

An initial time period TP1 of at most 1 second, preferably at most 500 milliseconds, most preferably at most 200 milliseconds may be defined from start of energizing of the solenoid towards the first power level PL1 to a point at which power is decreased from the first power level PL1.

Whilst the magnitude of the first power level PL1 may be associated with an elevated noise level, for the reasons explained previously, limiting the initial time period TP1 has been found to alleviate user discomfort/annoyance associated with such an elevated noise level.

It is noted that the initial time period TP1 being less than 200 milliseconds may mean that the solenoid is driven at the first power level, e.g. full power, for a single wave of the electrical signal or for only a few waves, e.g. fewer than fifteen waves, of the electrical signal, noting that a mains electrical signal may have a frequency of 50 Hz or 60 Hz.

Subsequently to the decrease in power from the first power level PL1, the control system 28 can increase power to drive the solenoid using the electrical signal. This increase in power from a level lower than the maximum power may, following the above-described overcoming of static friction, balance noise generation with efficient liquid displacement to produce the beverage and/or efficient fluid displacement to prime the vibration pump 12.

In some embodiments, such as shown in FIG. 3A, the first power level PL1 is 100% of the maximum power defined by the electrical signal of the power supply. This may provide most assistance to the pumping member to overcome static friction, as well as any adhesion(s) between the pumping member and the guiding surface(s) of the vibration pump 12 along which the pumping member is movable.

In some embodiments, such as shown in FIG. 3A, the control system 28 is configured to generate, using the electrical signal, a pulse of power for initially driving the solenoid to the first power level PL1. The pulse may be defined by an upward slope to reach the first power level PL1 and a downward slope away from the first power level PL1 being parallel to each other, or at least substantially parallel to each other.

Such a pulse shape, e.g. rectangular pulse shape, in which the increase to the first power level PL1 and the decrease in power from the first power level PL1 are abrupt/sudden can assist the pumping member to overcome static friction whilst minimizing generation of persistent loud noise.

In at least some embodiments, such as shown in FIG. 1, the control system 28 is configured to decrease power from the first power level PL1 to a second power level PL2A, PL2B that is greater than zero. By avoiding ceasing of powering of the solenoid in this way, the pump control can beneficially capitalize on the above-described assistance to the pumping member to overcome static friction.

In some embodiments, the second power level PL2A, PL2B is less than 85%, preferably less than 75%, of the maximum power for driving the solenoid.

Such a second power level PL2A, PL2B has been empirically found to assist in alleviating excessive noise generation by limiting pumping member, e.g. plunger/piston, acceleration.

In some embodiments, the second power level PL2A, PL2B is between 40% and 85%, most preferably between 40% and 75%, such as about 60%, of the maximum power for driving the solenoid. Thus, efficient fluid pumping may be balanced with alleviating excessive noise generation.

In at least some embodiments, the control system 28 is configured to adjust power level for driving the solenoid by applying phase angle control to the electrical signal. It is noted that the term "phase angle control" is synonymous with the terms phase-fired control (PFC) and phase-cutting control.

In such embodiments, the control system 28 may include a modulating component, e.g. a triode for alternating current (TRIAC) or silicon controlled rectifier (SCR).

The control system 28 may be configured to implement a delay, from the zero crossing of the electrical signal, until the modulating component is forced into a conduction state.

This delay may be expressed in time when the frequency of the power supply, for example mains frequency, is known, or may be more conveniently defined by a delay angle when the electrical signal, e.g. mains electrical signal, is 360°.

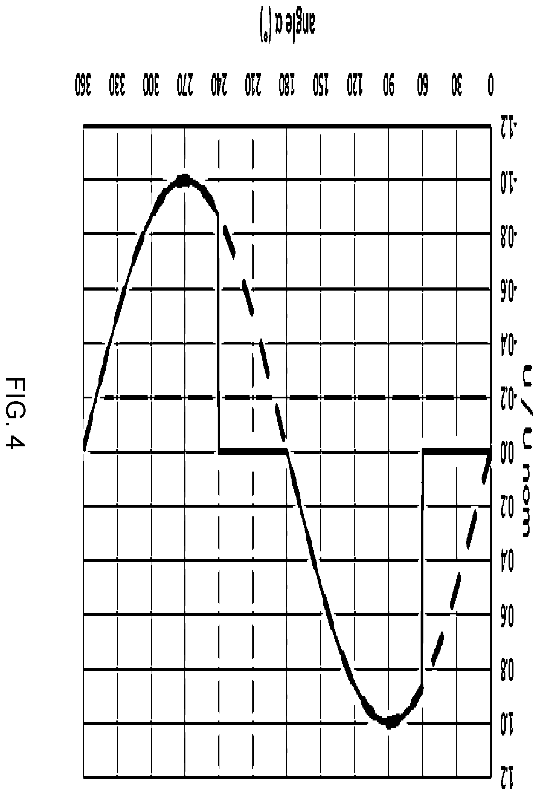

As an illustrative non-limiting example, FIG. 4 depicts an electrical signal, in this case a mains voltage signal and phase-cutting/phase angle control having a delay angle of 60°.

The percentage of the maximum power may be obtained by integrating the phase angle control signal up to the zero crossing, dividing this by the integral of the electrical signal up to the zero crossing, and multiplying by 100.

For example, in the case of the 60° delay angle for the sinusoidal electrical signal shown in FIG. 4, the percentage of the maximum power is 75%.

In another example, in the case of a 45° delay angle for a sinusoidal electrical signal, the percentage of the maximum power is 85%.

In the context of embodiments in which the control system 28 is configured to adjust power level for driving the solenoid by applying phase angle control to the electrical signal, the second power level PL2A, PL2B being less than 85% of the maximum power for driving the solenoid may be implemented by a greater than 45° delay angle.

The second power level PL2A, PL2B being less than 75% of the maximum power for driving the solenoid may be implemented by a greater than 60° delay angle.

It is noted that the electronic circuitry that enables phase cutting control may be already integrated into an existing beverage machine 10. Accordingly, the combined pump noise reduction and static friction overcoming advantages explained herein may be realizable without hardware changes and cost increases associated with such hardware increases.

More generally, and referring again to FIG. 3A, the control system 28 may be configured to implement the initial driving of the solenoid, the decreasing power from the first power level PL1, and the subsequent increasing power to drive the solenoid during a pump priming process (see the dotted line in FIG. 3A) in which both air and liquid are displaced by the vibration pump 12.

The control system 28 implementing this control sequence during the pump priming process enables combined pump noise reduction and static friction overcoming when the vibration pump 12 is started without liquid being within the pump chamber in which the pumping member is displaceable.

Such a control sequence, or at least a variation thereof that retains the combined pump noise reduction and static friction overcoming advantages, may alternatively or additionally be employable at every start-up of the vibration pump 12, in other words during a beverage preparation process.

Accordingly, the control system 28 may be configured to implement the initial driving of the solenoid, the decreasing power from the first power level PL1, and the subsequent increasing power to drive the solenoid during such a beverage preparation process (see the solid line in FIG. 3A) in which liquid is displaced by the vibration pump 12.

In such embodiments, and as shown in FIG. 3A, the second power level PL2A employed in the pump priming process may be lower than the second power level PL2B employed in the beverage preparation process.

Such a lower second power level PL2A in the case of the pump priming process may reflect greater need to initially limit acceleration of the pumping member, e.g. plunger/piston, when the vibration pump 12 is displacing air.

Thus, for example, a larger phase delay may be needed to initially limit acceleration of the pumping member, e.g. plunger/piston, following the decrease from the first power level PL1 when priming of the vibration pump 12 is needed.

The second power level PL2A, PL2B may be predefined. Whether the lower second power level PL2A or the higher second power level PL2B is implemented may depend on data received by the control system 28 indicative of water presence or absence in the vibration pump 12.

Such data may be memorized from a previous use of the beverage machine 10 by the control system 28, for example in a processor, e.g. microprocessor, included in the control system 28. This may also be the case when the beverage machine 10 is used for the very first time by the consumer, with the data indicative of the absence of water being loaded onto the processor, e.g. microprocessor, at the factory.

In some embodiments, such as shown in FIG. 3A, the control system 28 is configured to linearly increase power for driving the solenoid subsequently to the decrease in power from the first power level PL1.

In such embodiments, phase cutting may be varied non-linearly, e.g. until the full wave is delivered to the vibration pump 12 that will deliver its maximum/full power.

The variation can be made in steps. The overall vibration pump control for the vibration pump's 12 start-up may take less than 12 seconds, when the vibration pump 12 has to prime, and less than 5 seconds otherwise. While the pump power increases, the counterpressure downstream of the vibration pump 12 may also increase, e.g. as the beverage processing chamber 16 fills up. This may allow for higher pump power with less risk of encountering high fluid flowrate and therefore high noise.

When this control is used to prime the vibration pump 12, in other words pumping air out of the vibration pump 12 until liquid, e.g. water, is drawn into the vibration pump 12, the control system 28 may be configured to drive the solenoid with the wave defined for an operational power level OPL, e.g. the full wave, in response to data, for instance sensory data, indicative of water flow. Such water flow may be, for example, detected by a flowmeter.

Such a flowmeter may, for example, have a monitoring device with a rotary member e.g. impeller, which is rotated by a flow through the monitoring device generated by the vibration pump 12. A sensing arrangement may be provided for sensing rotation of the rotary member, thereby to detect the flow. This sensing arrangement, for example, comprises a magnetic sensing circuit, which detects when a magnet (or set of magnets) carried by the impeller passes a magnetic sensing circuit. Alternative flowmeter designs can also be contemplated.

In some embodiments, and referring again to FIG. 3A, the control system 28 is configured to increase power to an operational power level OPL subsequently to the decrease in power from the first power level PL1. This may assist throughput of fluid, in particular liquid and/or air, through the vibration pump 12.

In such embodiments, the operational power level OPL may be at least 80%, preferably at least 90%, most preferably at least 95% of the maximum power.

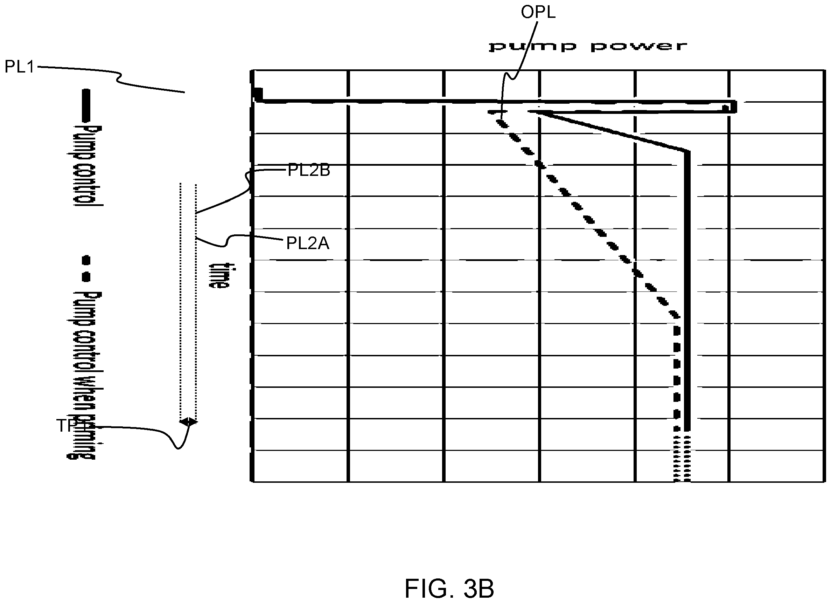

In some embodiments, such as shown in FIG. 3A, the operational power level OPL is 100% of the maximum power. In alternative embodiments, such as shown in FIG. 3B, the control system 28 increases power to an operational power level OPL that is less than the maximum power (100%), for example in a scenario in which the vibration pump 28 is to be stopped afterward without proceeding to implement the beverage processing process, or in a scenario in which the beverage to be delivered by the beverage machine 10 requires an operational power level OPL lower than 100%.

In further embodiments, the control system 28 increases power to an operational power level OPL equal to the maximum power (100%), for example should energizing of the vibration pump 12 be required to be maintained in order to combine the priming process with the beverage preparation process.

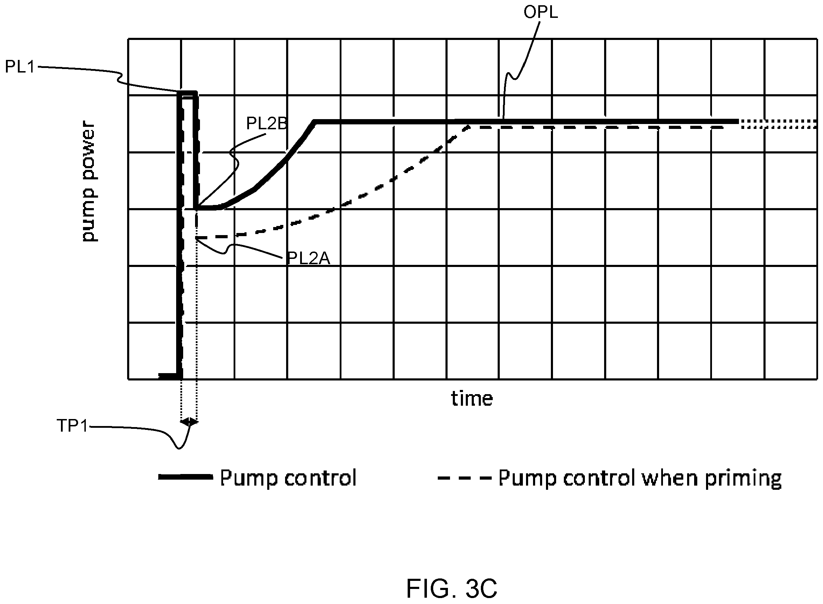

In some embodiments, such as shown in FIG. 3C, the control system 28 is configured to non-linearly increase power for driving the solenoid subsequently to the decrease in power from the first power level PL1. Such non-linear increase in power may assist in reducing noise generated by the vibration pump 12.

In such embodiments, phase cutting may be varied, e.g. until the full wave is delivered to the vibration pump 12 that will deliver its maximum/full power. Such phase cutting may be linear or non-linear in order to achieve the non-linear increase in power for driving the solenoid.

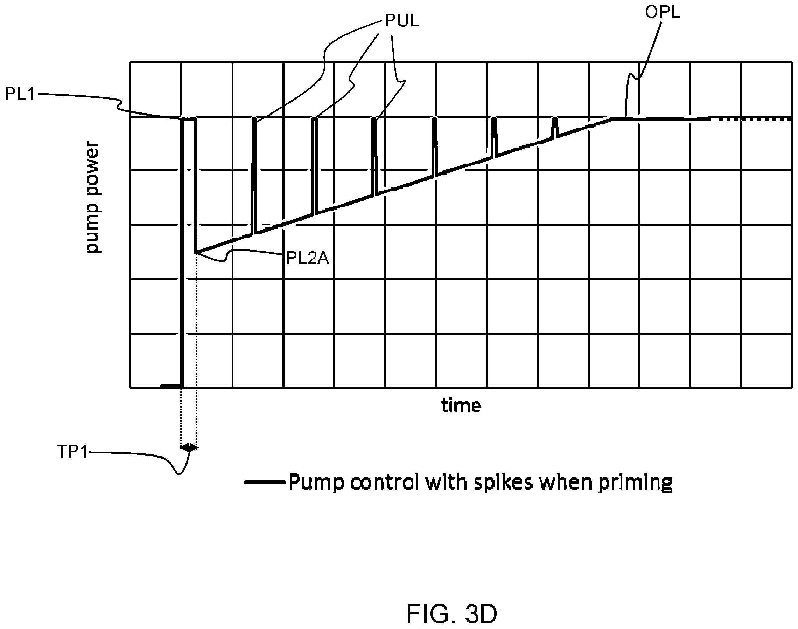

In some embodiments, such as shown in FIG. 3D, the control system 28 is configured to increase power, subsequently to the decrease in power from the first power level PL1, according to a ramped profile but with one or more pulses PUL being provided along, and protruding from, the ramped profile. Including such pulse(s) PUL along and protruding from the ramped profile may assist the pumping member to overcome static friction and/or assist with providing audible feedback to the user of the beverage machine 10.

In such embodiments, the, e.g. each of the, one or more pulses PUL may protrude to a pulse power level that is at least 80%, preferably at least 90%, most preferably at least 95%, for example 100%, of the maximum power.

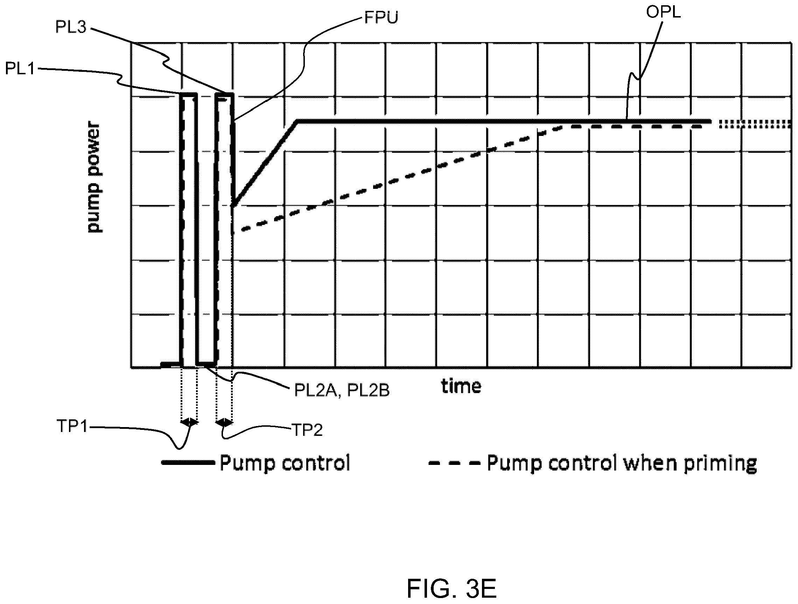

In some embodiments, such as shown in FIG. 3E, the control system 28 is configured to generate, using the electrical signal, a one or more secondary pulses of power FPU following the decrease in power from the first power level PL1.

Each of the secondary pulse(s) of power FPU may be implemented by increasing power from the second power level PL2A, PL2B, to a third power level PL3, with a subsequent time period TP2, for example of at most 200 milliseconds, being defined from start of energizing of the solenoid from the second power level PL2A, PL2B towards the third power level PL3 to a point at which power is decreased from the third power level PL3.

In some embodiments, each of the secondary pulse(s) FPU may be defined by an upward slope to reach the third power level PL3 and a downward slope away from the third power level PL3 being parallel to each other, or at least substantially parallel to each other.

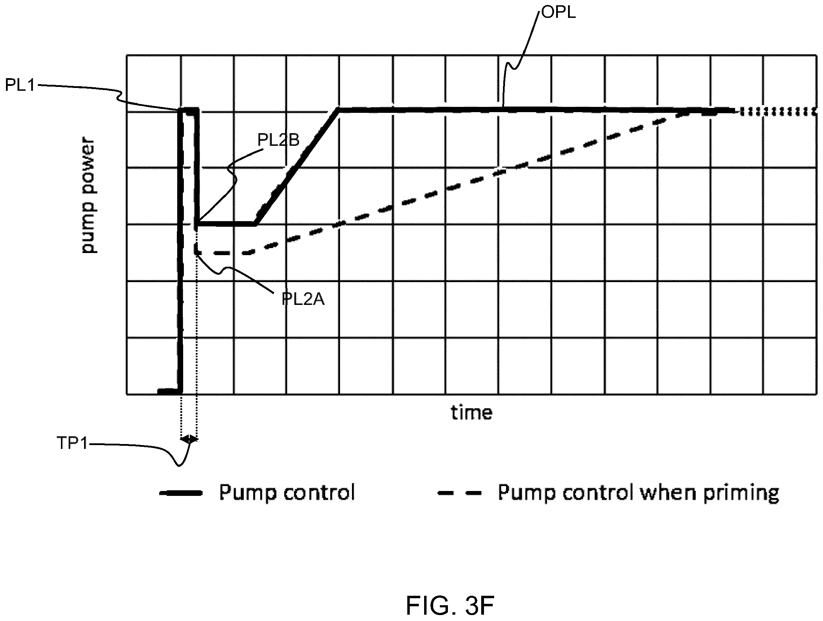

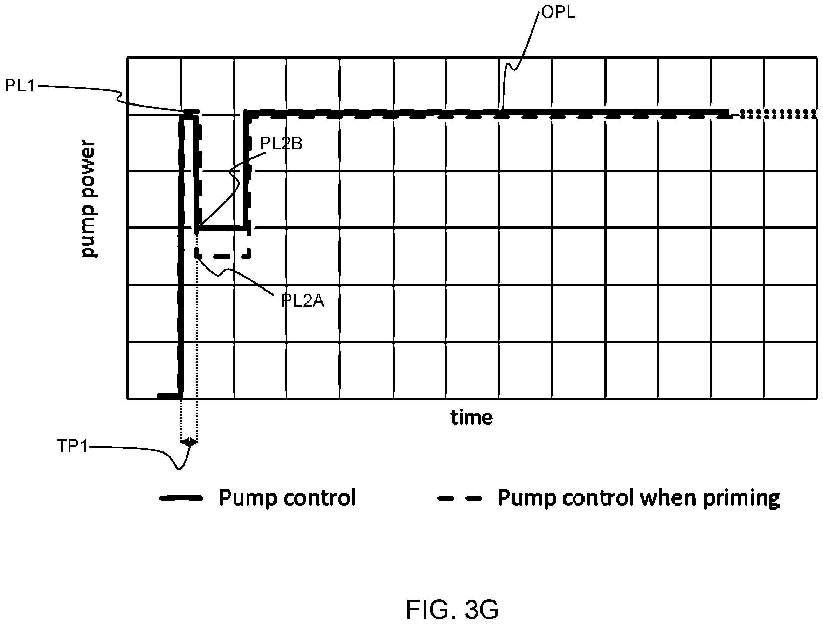

In some embodiments, such as shown in FIGs. 3F and 3G, the control system is configured to, following the decrease in power from the first power level PL1 and prior to the increase in power, maintain a constant power level using the electrical signal. For example, the above-mentioned second power level PL2A, PL2B may be maintained for a given time period before being increased to the operational power level OPL, for example to 100% of the maximum power.

In such embodiments, the increase from the constant power level may be ramped, as shown in FIG. 3F. Alternatively, the increase from the constant power level may be abrupt, as shown in FIG. 3G. In the latter case, an upward slope to reach the operational power level OPL may, for example, be parallel, or at least substantially parallel, with the downward slope away from the first power level PL1.

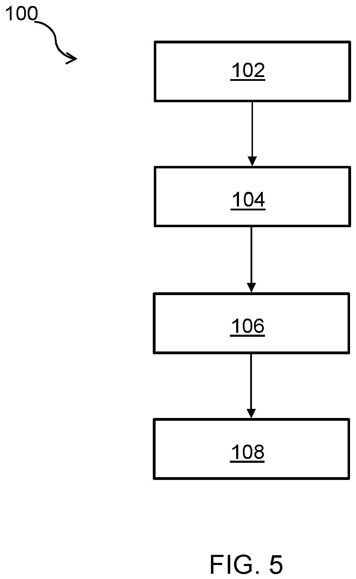

FIG. 5 provides a flowchart of a method 100 for operating a solenoid-comprising vibration pump 12 of a beverage machine 10, for example a beverage machine 10 as described above with reference to FIG. 1. The method 100 comprises receiving 102 an electrical signal from a power supply. In step 104, the solenoid of the vibration pump 12 is initially driven, using the electrical signal, at a first power level PL1. In step 106, power is decreased from the first power level PL1. In step 108, power is increased, using the electrical signal, to drive the solenoid. Step 108 is subsequent to the decreasing power in step 106.

The first power level PL1 may be at least 80%, preferably at least 90%, most preferably at least 95% of a maximum power defined by the electrical signal.

Alternatively or additionally, an initial time period TP1 of at most 1 second, preferably at most 500 milliseconds, most preferably at most 200 milliseconds may be defined from start of energizing of the solenoid towards the first power level PL1 to a point at which power is decreased from the first power level PL1.

The method 100 may be performed using the control system 28 of the beverage machine 10 described above.

Further provided is a computer program comprising computer program code which is configured, when the computer program is run on one or more processors, to cause the one or more processors to implement the method 100 according to any of the embodiments described herein.

The processor(s) may be included in the control system 28 of the beverage machine 10.

As discussed above, embodiments make use of a control system 28. The control system 28 can be implemented in numerous ways, with software and/or hardware, to perform the various functions required. A processor is one example of a control system 28 which employs one or more microprocessors that may be programmed using software (e.g., microcode) to perform the required functions. A control system 28 may however be implemented with or without employing a processor, and also may be implemented as a combination of dedicated hardware to perform some functions and a processor (e.g., one or more programmed microprocessors and associated circuitry) to perform other functions.

Examples of control system 28 components that may be employed in various embodiments of the present disclosure include, but are not limited to, conventional microprocessors, application specific integrated circuits (ASICs), and field-programmable gate arrays (FPGAs).

In various implementations, a processor or control system 28 may be associated with one or more storage media such as volatile and non-volatile computer memory such as RAM, PROM, EPROM, and EEPROM. The storage media may be encoded with one or more programs that, when executed on one or more processors and/or control systems 28, perform the required functions. Various storage media may be fixed within a processor or control system 28 or may be transportable, such that the one or more programs stored thereon can be loaded into a processor or control system 28.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

A single processor or other unit may fulfill the functions of several items recited in the claims.

The mere fact that certain measures are recited in mutually different dependent claims does not indicate that a combination of these measures cannot be used to advantage.

A computer program may be stored/distributed on a suitable medium, such as an optical storage medium or a solid-state medium supplied together with or as part of other hardware, but may also be distributed in other forms, such as via the Internet or other wired or wireless telecommunication systems.

If the term "adapted to" is used in the claims or description, it is noted the term "adapted to" is intended to be equivalent to the term "configured to".

Any reference signs in the claims should not be construed as limiting the scope.

## Claims

1. A beverage machine (10) comprising:
a vibration pump (12) for displacing liquid to prepare a beverage, the vibration pump comprising a pumping member and a solenoid energizable to cause displacement of the pumping member; and
a control system (28) configured to:
receive an electrical signal from a power supply;
initially drive the solenoid, using the electrical signal, at a first power level (PL1);
decrease power from the first power level; and
subsequently to the decrease in power from the first power level, increase power to drive the solenoid using the electrical signal,
wherein the control system is configured to use the electrical signal to generate a power spike that initially drives the solenoid at the first power level and then diminishes to define the decrease in power from the first power level.

2. The beverage machine (10) according to claim 1, wherein the electrical signal defines a maximum power for driving the solenoid, the first power level being at least 80%, preferably at least 90%, most preferably at least 95% of the maximum power.

3. The beverage machine (10) according to claim 1 or claim 2, wherein an initial time period (TP1) of at most 1 second, preferably at most 500 milliseconds, most preferably at most 200 milliseconds is defined from start of energizing of the solenoid towards the first power level (PL1) to a point at which power is decreased from the first power level.

4. The beverage machine (10) according to any one of claims 1 to 3, wherein the control system (28) is configured to generate, using the electrical signal, a pulse of power for initially driving the solenoid to the first power level (PL1).

5. The beverage machine (10) according to any one of claims 1 to 4, wherein the control system (28) is configured to decrease power from the first power level (PL1) to a second power level (PL2A, PL2B) that is greater than zero.

6. The beverage machine (10) according to claim 5, wherein the second power level (PL2A, PL2B) is less than 85%, preferably less than 75%, of a maximum power defined by the electrical signal.

7. The beverage machine (10) according to any one of claims 1 to 6, wherein the control system (28) is configured to linearly or non-linearly increase power for driving the solenoid subsequently to the decrease in power from the first power level (PL1).

8. The beverage machine (10) according to any one of claims 1 to 7, wherein the control system (28) is configured to increase power, subsequently to the decrease in power from the first power level (PL1), according to a ramped profile but with one or more pulses being provided along, and protruding from, the ramped profile.

9. The beverage machine (10) according to any one of claims 1 to 8, wherein the control system (28) is configured to increase power to an operational power level (OPL) subsequently to the decrease in power from the first power level (PL1); optionally wherein the operational power level (OPL) is at least 80%, more preferably at least 85%, most preferably at least 90% of a maximum power defined by the electrical signal.

10. The beverage machine (10) according to any one of claims 1 to 9, wherein the control system (28) is configured to, following the decrease in power from the first power level (PL1) and prior to the increase in power, maintain a constant power level using the electrical signal.

11. The beverage machine (10) according to any one of claims 1 to 10, wherein the control system (28) is configured to adjust power level for driving the solenoid by applying phase angle control to the electrical signal.

12. The beverage machine (10) according to any one of claims 1 to 11, wherein the control system (28) is configured to implement the initial driving of the solenoid, the decreasing power from the first power level (PL1), and the subsequent increasing power to drive the solenoid during at least one of:
a pump priming process in which both air and liquid are displaced by the vibration pump (12); and
a beverage preparation process in which liquid is displaced by the vibration pump.

13. The beverage machine (10) according to any one of claims 1 to 12, comprising a container (14) for containing the liquid, and a beverage processing chamber (16), wherein the vibration pump (12) is arranged to displace the liquid from the container to the beverage processing chamber; optionally wherein the beverage machine further comprises a heater (22) for heating the liquid.

14. A method (100) for operating a solenoid-comprising vibration pump (12) of a beverage machine (10), the method comprising:
(102) receiving an electrical signal from a power supply;
(104) initially driving the solenoid, using the electrical signal, at a first power level (PL1);
(106) decreasing power from the first power level; and
(108) increasing power to drive the solenoid using the electrical signal subsequently to the decreasing power, wherein the method comprises using the electrical signal to generate a power spike that initially drives the solenoid at the first power level and then diminishes to define the decrease in power from the first power level.

15. A computer program comprising computer program code which is configured, when the computer program is run on one or more processors, to cause the one or more processors to implement the method (100) of claim 14.
